(19) Europäisches Patentamt
European Patent Office
Office européen des brevets

(11) **EP 3 336 674 B1**

(12) **EUROPEAN PATENT SPECIFICATION**

(45) Date of publication and mention
of the grant of the patent:
**24.06.2020 Bulletin 2020/26**

(51) Int Cl.:
***G06F 3/0488*** (2013.01)  ***G06F 3/0485*** (2013.01)

(21) Application number: **16204756.7**

(22) Date of filing: **16.12.2016**

(54) **METHOD AND SYSTEM FOR PROVIDING A SLIDER BAR CONTROL ON A GRAPHICAL USER INTERFACE OF A PORTABLE DEVICE**

VERFAHREN UND SYSTEM ZUR BEREITSTELLUNG EINER SCHIEBEREGLERSTEUERUNG AUF EINER GRAFISCHEN BENUTZEROBERFLÄCHE EINER TRAGBAREN VORRICHTUNG

PROCÉDÉ ET SYSTÈME DESTINÉS À PROCURERUNE COMMANDE DE BARRE DE CURSEUR SUR UNE INTERFACE UTILISATEUR GRAPHIQUE D'UN DISPOSITIF PORTABLE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(43) Date of publication of application:
**20.06.2018 Bulletin 2018/25**

(73) Proprietor: **Alpine Electronics, Inc.**
**Tokyo (JP)**

(72) Inventor: **Mueck, Reinmar**
**70567 Stuttgart (DE)**

(74) Representative: **Schmitt-Nilson Schraud Waibel Wohlfrom**
**Patentanwälte Partnerschaft mbB**
**Pelkovenstraße 143**
**80992 München (DE)**

(56) References cited:
**WO-A1-2010/059956    ES-A1- 2 345 757**
**US-A1- 2007 164 991    US-A1- 2010 039 400**
**US-A1- 2012 151 401**

EP 3 336 674 B1

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

**Description**

The present disclosure relates to a method of providing a slider bar control via a slider bar displayed on a graphical user interface of a portable device, wherein the slider bar defines a data range from which data can be selected by user input, and to a system for providing a slider bar control on a graphical user interface displayed on a portable device.

It is known in the art to use slider bars that allow selection of data from a data range represented by the slider bar between a preset minimum and maximum item of data for processing by a data processing device, e.g. for visualization on the graphical user interface. For example, such graphical user interface is displayed on a portable device, such as a smartphone or tablet computer, for selection of video data from a data range of a video stream via a slider bar representing the data range for reproducing the video data on the portable device, e.g. from a particular point of time selected via the slider bar.

An item of data may be selected from a data range by manipulating a slider element displayed like a slider icon on the slider bar. The slider element may be manipulated through a touch operation by a user input member (such as the user's finger) and moving the user input member a certain distance. There are several known concepts which allow setting the data range on which the slider element is working.

Operating slider elements (also simply referred to as "slider") by finger swipe can be quite difficult and cumbersome, e.g. if the user wants to move the slider just along a small distance, which could easily be only a tenth of the size of the fingertip. A common use case is, for example, jumping back 30 seconds in a 2 hour video stream by swiping the progress slider of a typical video player a certain distance in forward or backward movement. Since 30 seconds is a very small time period as compared to the 2 hours of the video stream, the slider must be moved only a very small distance representing the 30 seconds within the slider bar representing the 2 hours of the whole video stream. This can be a problem particularly in connection with portable devices, such as smartphones having only a relatively small display area for displaying the slider bar. For example, if the slider bar has a length of 70 mm for representing a 2 hour video stream, jumping back 30 seconds would require a 30 sec * (70 mm / 7200 sec) ($\cong$ 0.3 mm) back movement of the slider by a finger swipe on the display, which is very difficult to perform with precision.

WO 2008/085770 A discloses a portable device with a touch screen display which detects a finger-in-contact or finger-in-range event at a first position on the touch screen display and a finger-out-of-range event at a second position on the touch screen display and then determines a distance between the first position and the second position. Next, the portable device identifies a user interface object associated with the first position, which includes a slide bar and a slide object, and moves the slide object along the slide bar in accordance with the distance between the first position and the second position.

US 6 922 816 B1 discloses a method and system for adjusting settings with slider controls having variable sensitivity which include providing a slider bar control button for the slider bar, and integrating fine and coarse adjustment control into the slider bar control button to allow precise manipulation of a value for the setting.

US 9 311 965 B1 discloses a touch screen control method for controlling a playback of multimedia content using a timeline-based interface which includes detecting a selection at a specific location on the timeline, and selectively zoom-displaying an area around the location where the selection is detected on the timeline where the event trigger has occurred.

EP 2 378 402 A1 discloses a slide bar display control device which includes a display means which indicates a first slide bar including a first slider and a first bar, an input means which can select an arbitrary part of the first slide bar shown on the display means based on touch operation, and a control means which controls the display means and the input means, wherein, when the control means detects that a first operation has been performed in a state that the first slider shown on the display means is being touched in the input means, the display means indicates a second slide bar including a second slider and a second bar, and wherein the second slider is a slider different in a variation amount of a set value per unit moving distance from the first slider. Thus, the sensitivity of a slider bar on a touch based display control device can be controlled by using a second slider and second bar to control the variation amount of a set value per unit moving distance from the first slider.

US 2012/151401 A relates to a method and apparatus for controlling a touch screen using a timeline bar which allows a user to freely manipulate and control content even on a small touch screen. The timeline bar is displayed on the top or bottom of the screen and there is considerable space in other directions, so that there is provided a technique for changing a scale of the timeline according to a dragging length in the space, i.e. for changing the amount of change in position of the content according to the shift of the bar in unit lengths. By doing so, the timeline may be zoomed-in, thus enabling more precise content control. For example, the timeline is zoomed-in at a predetermined zoom ratio as the user drags his or her finger tip starting from the bar on the timeline by a first distance $d_1$ by performing the first dragging. The bar is shifted to correspond to the second dragging gesture of shifting the bar. Through such double-dragging, the timeline is zoomed-in to a desired level by the first dragging and shifts the bar to a desired position on the zoomed-in timeline by the second dragging, thereby more precisely controlling the display of content.

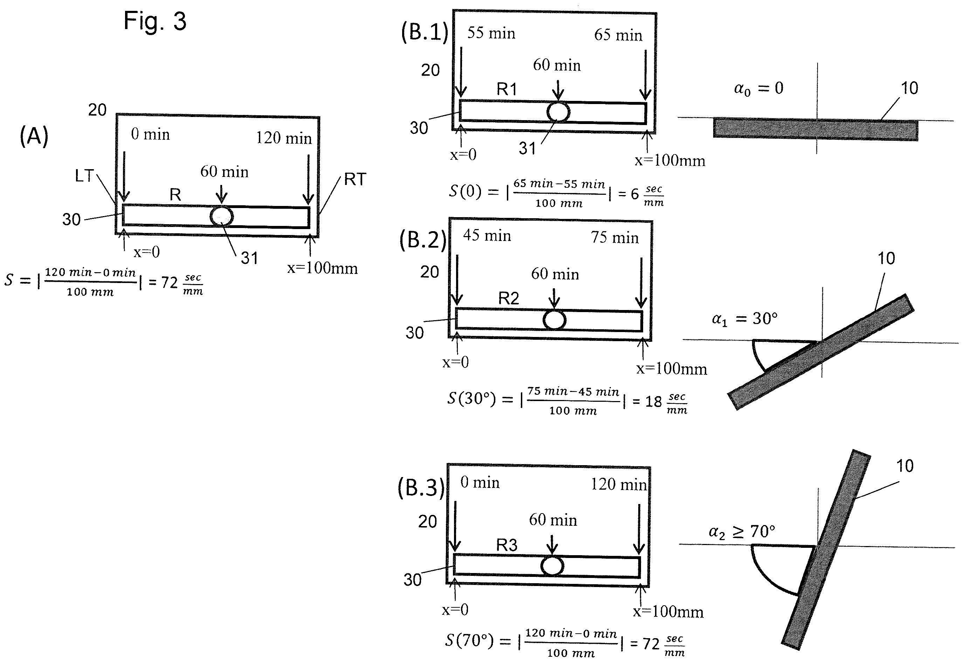

ES 2 345 757 A1 relates to a mobile device which is capable of zooming-in extensive documents like text documents or maps on the screen of the mobile device. The mobile device employs an inclination detector, the image of the document being displayed through the display screen according to the inclination. Further, the mobile device includes a longitudinal movement detector, wherein the image of the document is being zoomed-in or out through the display screen as a function of the sensing of the movements. According to Figs. 3a-3d, by slightly rotating the mobile device to the right, as shown in Fig. 3b, the image of the map that is shown on the display screen starts to move to the left. In contrast thereto, according to Figs. 4a-4c, the increase or decrease of the size of an extended document being displayed is controlled by moving the mobile device in the longitudinal direction upwards or downwards.

The invention is defined in the attached claims.

The processing device may be, for example, implemented in, or part of, a microprocessor of the portable device, or may be a separate component, or may be a distributed system (in hardware and/or software) using one or more processors and/or integrated circuits.

According to an embodiment, the processing device is at least in part comprised in the portable device. The portable device may be at least one of a smartphone, a tablet computer, a portable computer, a wearable computer, a remote control, a media player, and a media player control.

According to aspects of the invention, the data range is changed particularly without changing the geometric extension or area of the slider bar (which thus stays the same in length when changing the orientation of the portable device). Accordingly, there is provided a specific way to influence a data range coincident with the actual selection of an item of data within this data range. In particular, the data selection can be controlled by a normal finger swipe which manipulates the slider element during and after changing the orientation.

Aspects of the invention allow to control indirectly the sensitivity of the slider element while moving the slider element. For example, a fine granular mapping could be a default for a non-tilted portable device (i.e. before changing the orientation), e.g. a maximum data range could be +/-1 min, whereas in case of a predetermined tilting angle of the portable device (i.e. after changing the orientation) the mapping could extend to a traditional data range, such as +/- 120 min. There is, therefore, provided a method and system for a slider bar control on a graphical user interface of a portable device which allow the user an easy and intuitive data selection from a data range represented by the slider bar even if the portable device has a relatively small display area.

According to an embodiment, the first orientation is comprised in a first orientation range around a horizontal orientation of the portable device with respect to a ground plane on which the user is located, and the second orientation is an orientation of the portable device which is not comprised in the first orientation range. For example, the first orientation range comprises inclination angles of +/- 5 degrees around the horizontal orientation. As such, small deviations from the horizontal orientation, such as by wobbling the portable device around the horizontal orientation in normal use, do not trigger changing the data range defined by the slider bar.

The data range is increased when the orientation of the portable device is changed from the first orientation to the second orientation. In this way, the user may intuitively manipulate the data selection towards items of data which are farer away from the current item of data.

In a potential implementation, the slider bar defines a data range of a media stream and the slider element is for selecting at least one timeline-based item of data of the video stream.

Any aspects and embodiments described herein with respect to the method can equally be employed in the system for providing a slider bar control with the processing device configured (by software and/or hardware) appropriately.

Aspects of the invention and embodiments will now be described with reference to the following Figures in which

Fig. 1    depicts a schematic block diagram of a system for providing a slider bar control on a graphical user interface displayed on a portable device according to an embodiment of the invention,

Fig. 2    shows exemplary graphical user interfaces with slider bars and slider bar data ranges adjusted according to orientation of the portable device according to embodiments of the invention,

Fig. 3    shows exemplary graphical user interfaces with slider bars and exemplary numerical slider bar data ranges adjusted according to exemplary orientation angles of the portable device according to embodiments of the invention.

The present invention is implemented in a computer which may be part of a portable device, such as a smartphone, a tablet computer, a portable computer, a wearable computer (such as a smartwatch, etc.), a remote control, a media player, or a media player control or e-book reader. The portable device according to the invention shall encompass all types of such portable computer devices which have a display which can be moved (e.g. tilted) by the user when holding the portable device in his or her hands, or when worn by the user. The portable device has appropriate processing capabilities (e.g. one or more processing devices, such as microprocessors) for processing (such as displaying, playback, transmitting, calculating, etc.) data selected from a data range by means of a slider bar.

In an embodiment the present invention is implemented in a computer, which includes client programs, also known as application programs ("apps").

One of ordinary skill in the art will recognize that any computer configuration may be used to implement the present invention, including a configuration wherein the client programs are resident in any computer. The following description of examples is presented to enable one of ordinary skill in the art to make and use the invention. Various modifications to the preferred embodiments and the generic principles and features described herein will be readily apparent to those skilled in the art.

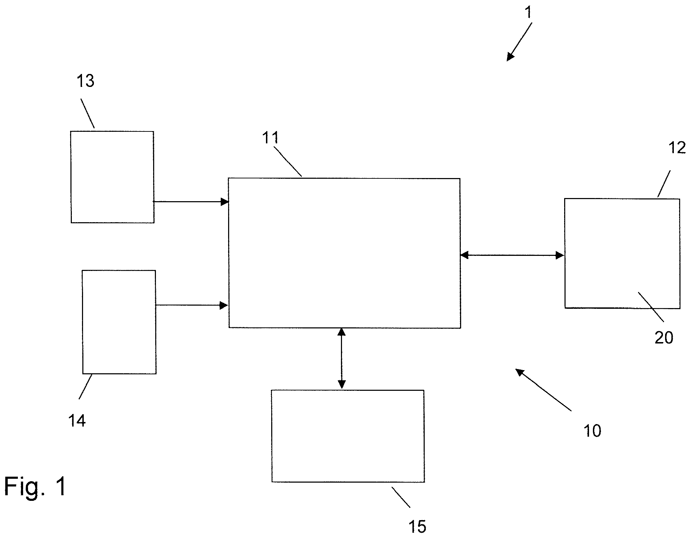

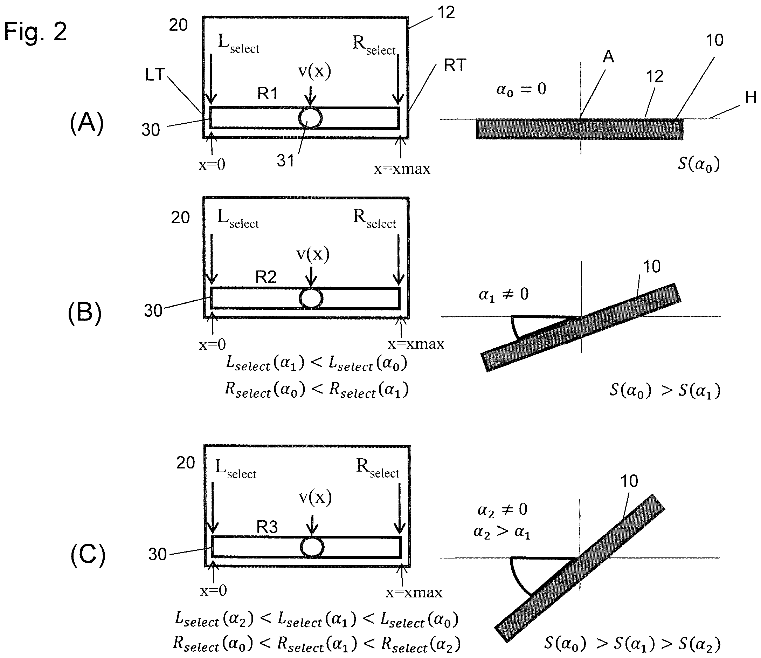

Fig. 1 depicts a schematic block diagram of a system 1 for providing a slider bar control on a graphical user interface displayed on a portable device 10 according to an embodiment of the invention. The system 1 generally includes a processing device 11, a data storage device 15 (non-volatile computer storage medium, e.g., hard drive, memory card, USB flash drive, solid-state drive, CD-ROM disk drive, etc.), and a display 12 (e.g., a touch screen, etc.) for displaying a graphical user interface 20. For example, a video stream may be stored on the data storage device 15 and may be processed by the processing device 11, e.g. reproduced on the display 12, wherein a data selection can be made on the graphical user interface 20 by means of a slider bar (as shown in Figures 2 and 3). A keyboard 14 for data entry other than through the touch screen, or another peripheral input device 14 may be coupled to the processing device 11 (e.g. through wireless connection) of the system 1. One of ordinary skill in the art will recognize that any combination of the components may be used to configure the system 1.

An orientation sensor 13 (such as an acceleration sensor and/or gyroscope) can operatively be coupled with the processing device 11, e.g. through software or hardware, in wired or wireless connection. The orientation sensor 13 can be internal or external to the system 1. It is particularly part of the portable device 10, e.g. integrated into the housing of the portable device. In the present implementation it measures an orientation angle $\alpha$ of the portable device 10, in particular an inclination or tilting angle $\alpha$ of the portable device 10. The display 12 is an integral part of the portable device 10, such as known from a typical smartphone, tablet computer, or smartwatch. The display is typically flat and defines a display plane which can be tilted or inclined in an angle $\alpha$ around an axis along an extension of the display plane. In principle, the orientation sensor 13 can provide any parameter, such as a measured parameter, which is indicative of an orientation or orientation change of the portable device 10. In the present implementation, the orientation angle $\alpha$ of the portable device 10 or change in orientation angle $\alpha$ provided by means of the orientation sensor 13 is indicative of an orientation or orientation change of the portable device 10, respectively.

For example, as shown in Fig. 2, the display 12 is provided on an upper side of the portable device 10 and defines a display plane (located in Fig. 2A in a horizontal plane H defining a horizontal orientation of the portable device 10) which can be tilted around an axis A (which is perpendicular to the drawing plane) along an extension of the display plane. The portable device 10 may have the form of a typical smartphone or tablet computer, i.e. is flat and has a housing with a substantially rectangular cross-section

Further aspects and embodiments of the invention will now be described with reference to Figures 2 and 3 which show exemplary embodiments thereof.

As shown in Fig. 2, the processing device 11 provides to the display 12 a slider bar 30 displayed on the display 12 in the graphical user interface 20. For example, the slider bar 30 may have an extension over the width of the display 12 or a part thereof. The slider bar 30 defines a data range R (Fig. 3A) from which items of data can be selected by the user. A slider element 31 (such as a displayed icon which can be moved along the slider bar 30 like a physical slider element in a notch) is associated with the slider bar 30 for selecting at least one item of data from the data range R by manipulating the slider element 31 through touch by a user input member, such as a user's finger or a pen. For example, by touching the slider element 31 with a finger, the user can move the slider element along the slider bar 30. The position of the slider element 31 is indicative of a selected item of data of the data range R. For example, in Fig. 3A the slider element 31 is at a position x corresponding to a value $v(x) = 60$ min from the beginning of the video stream. When the user moves the slider element 31 to that position, an item of data at the point of time 60 min is selected from the data range R which includes data of 120 min duration of the video stream. The data range R comprises an upper data level $R_{select}$ and a lower data level $L_{select}$ defining the data range R between them and the upper data level and lower data level $R_{select}$, $L_{select}$ are located on respective opposite sides (here: right side RT and left side LT) of the slider bar 30.

It should be noted that the slider bar 30, in principle, can have any suitable shape for providing a slider control. For example, in the present embodiment, the slider bar has a shape of a horizontal longitudinal rectangle so that the slider element is configured to move in a horizontal direction. In another embodiment, the slider bar could also be arranged in vertical direction, or can have a different form such as at least partially arcuate, circular or elliptical. In this concern, the term "bar" shall encompass, in principle, any geometrical shape having a longitudinal extension which is considerably greater than in transverse direction. In all such embodiments, the slider element 31 can be configured to be moved, in principle, in any direction, e.g. from left to right or up to down, or vice versa. Further, as to the data ranges represented by the slider bar, the upper data level and lower data level can be arranged, in principle, on any side of the slider bar. Preferably, the upper data level and lower data level are arranged in mutual opposite directions towards a mid point of the slider bar or a mid axis along a longitudinal extension of the portable device (which typically serves, in most cases, as an intuitive tilting axis of the portable device).

The slider control provides a mapping between the slider element's physical positon $x \in [0; xmax)$ and a value $v \in [L0; R0]$ from within the total data range $R = [L0; R0]$ controlled by the slider bar 30 and slider element 31. L0 is the lower data level on the left side and R0 is the upper data level on the right side of the data range R. The actual item of data (data value) $v = v(x)$ is therefore determined by the actual position x of the slider element 31.

In Fig. 2A, the portable device 10 is in a first orientation which corresponds to an orientation angle $\alpha_0 = 0$ (i.e. non-tilted) corresponding to a horizontal orientation along horizontal plane H. The slider bar 30 defines a first data range R1 from which items of data can be selected by the user. In Fig. 2B, the orientation of the portable device 10 changes to a second orientation $\alpha_1$. As shown in Fig. 2A-2B, the data range R1 is changed to a different data range R2 when the orientation of the portable device 10 sensed by the orientation sensor 13 is changed from the first orientation (at $\alpha_0$) to the second orientation (at $\alpha_1$). At the same time, the geometric extension of the slider bar 30 between x=0 and x=xmax is not changed, i.e. the left and right side edges of the slider bar 30 are not changed and stay at x=0 and xmax. For example, xmax = 100 mm, so that the slider bar has a geometric extension (length) of 100 mm.

In particular, the orientation angle $\alpha$ determines the data range R of possible selectable items of data by making the lower and upper data levels depending on $\alpha$.

$$L_{select}(\alpha) = L0 + l(\alpha)$$

$$R_{select}(\alpha) = R0 + r(\alpha)$$

with upper data level $R_{select}$ and a lower data level $L_{select}$ depending on the orientation or orientation change corresponding to the orientation angle $\alpha$.

By this the selectable data range becomes depending on the orientation:

$$R(\alpha) = [L_{select}(\alpha); R_{select}(\alpha)]$$

With selecting the slider control on the graphical user interface 20, the inventive mechanism is triggered and becomes active and the tilting of the portable device 10 makes the data range R defined by the slider bar 30 dependent on orientation:

$$L0 \le L_{select}(\alpha) \le v(x) \le R_{select}(\alpha) \le R0.$$

In the present embodiment, with making the selectable data range R dependent on orientation, a sensitivity (S) of the slider element 31 is also made dependent on orientation or orientation change. The sensitivity S of the slider element 31 defines how a change of the slider element's physical position $\Delta x$ relates to a change of the selected item of data (data value) $\Delta v$.

$$S = \left| \Delta v / \Delta x \right|$$

For making the complete data range R selectable by the slider element, the sensitivity S is:

$$S = \left| (R0-L0)/xmax \right|$$

Above S is the sensitivity of a slider element 31 without orientation dependent selectable range.

With the proposed invention, the selectable items of data depend on the portable device's orientation and the slider element's control sensitivity becomes angular dependent as well:

$$S(\alpha) = \left| (R_{select}(\alpha) - L_{select}(\alpha))/xmax \right|$$

According to an embodiment, as shown in Fig. 2A-2C, an amount of change of the upper data level $R_{select}$ and lower data level $L_{select}$ is at least partially proportional to an amount of change in orientation angle $\alpha$ from the first orientation (at $\alpha_0$) to the second orientation (at $\alpha_1$). That is, the greater the tilting amount or tilting angle $\alpha$, the greater is the data range setting from R1 to R3.

For example, the upper data level $R_{select}$ is changed when the portable device 10 is tilted in a direction towards the side RT of the upper data level $R_{select}$, and the lower data level $L_{select}$ is changed when the portable device 10 is tilted in a direction towards the side LT of the lower data level $L_{Select}$ which is opposite to the tilting direction towards the side RT. The variation of the data ranges R when tilting to each side may be symmetrical (i.e. may be the same such as having the same proportionality) or may be asymmetrical (i.e. may be different).According to another embodiment, both data levels $R_{select}$, $L_{select}$ may be changed coincidently when tilting to any one side RT or LT.

As illustrated in Fig. 2A-2C, the data range R1 is changed to a second data range R2 when the orientation of the portable device 10 is changed from the first orientation (at $\alpha_0$) to a second orientation (at $\alpha_1$), and the second data range R2 is changed to a third data range R3 when the orientation of the portable device 10 is changed from the second orientation (at $\alpha_1$) to a third orientation (at $\alpha_2$). Through the provided slider element 31, at least one respective item of data can be selected from the first data range R1, second data range R2 and/or third data range R3, respectively.

Fig. 3 shows exemplary graphical user interfaces 20 with slider bars 30 and exemplary numerical slider bar data ranges R1-R3 adjusted according to exemplary orientation angles $\alpha_0$ - $\alpha_2$ of the portable device 10 according to embodiments of the invention.

In Fig. 3A, a slider bar control with a data range R of 120 min video data of a video stream is shown. The user can see the progress of the reproduced media file because while reproducing the slider element 31 moves from left to right. By the slider element 31 one can also change the actual reproduction position, i.e. select an item of data at a particular point of time. With the numbers as shown in Fig. 3A, the sensitivity S is 72 sec/mm.

In this example, using a portable device 10 with an extension of 100 mm on the display 12 for displaying the slider bar 30, the user may have difficulties in selecting the right position (item of data at the desired point of time). Moving the finger by half of a finger width would be about 10 mm and would correspond to jumping by 720 sec = 12 min. This might be rather insensitive and insufficient for many use cases.

According to aspects of the invention, in case the user would like to select another reproduction position and would like to activate the slider control by touching the slider element, for example, the data range R is made dependent on the current tilting angle of the portable device, and the data range R changes to data ranges R1 to R3 as depicted in Figures B.1 to B.3. The smallest data range R1 would be set in a horizontal position at $\alpha_0$ in order to have easy selectivity of data items, fine granular mapping of the video stream and a low sensitivity S of the slider element 31, and would increase to greater data ranges R2, R3 when tilting the portable device and depending on the tilting angle. This is a quite intuitive way of operating the slider bar, since tilting may reflect somehow the wish of the user to move towards data items which are farer away from the current position, and the grade of tilting to the left may be a reflection of how far the user wants to go back to the beginning of the video stream in the present example. For such a drastic moving back, the user needs a high sensitivity S of the slider element 31, which provides a rather coarse granular mapping of the video stream by the slider bar 30. Accordingly, the data range is increased in data range R3 to display the beginning of the video stream at 0 min.

Thus, in case the slider control is activated by touching the slider control element for example and without tilting the portable device the sensitivity S is quite low allowing for small changes around the current position, whereas with tilting the portable device the user can select from a more and more growing range (Figures 3B.2, 3B.3) until the full data range available can be selected. In the example, the full range becomes selectable only if the portable device is tilted by 70° or more. The user can control the actual selection of the data by slider element movement at the same time as controlling the sensitivity of the slider movement. It is intuitive as tilting the portable device to one side may increase the data range at that side. Moving the slider element, e.g., to the left selects a data item on the left side, and sliding the slider element to the left and tilting the portable device to the left at the same time selects a data item farer away on the left side.

## Claims

1. A method of providing a slider bar control via a slider bar displayed on a graphical user interface of a portable device, comprising the steps of:

     - providing a slider bar (30) on the graphical user interface (20), wherein the slider bar (30) defines a data range (R) from which data can be selected by the user,
     - providing a slider element (31) associated with the slider bar (30) for selecting at least one item of data from the data range (R) by manipulating the slider element (31) through touch by a user input member, and
     - increasing the data range (R) in response to an orientation change of the portable device (10) when the orientation of the portable device (10) is changed from a first orientation ($\alpha_0$) to a second orientation ($\alpha_1$),
     - wherein the data range (R) comprises an upper data level ($R_{select}$) and a lower data level ($L_{select}$) defining the data range (R) between them, wherein at least one of the upper data level and lower data level ($R_{select}$, $L_{Select}$) is changed when the orientation of the portable device is changed from the first orientation ($\alpha_0$) to the second orientation ($\alpha_1$), wherein an amount of change of the at least one of the upper data level and lower data level ($R_{select}$, $L_{select}$) is at least partially proportional to an amount of change in orientation ($\alpha$) from the first orientation ($\alpha_0$) to the second orientation ($\alpha_1$),
     - wherein a sensitivity (S) of the slider element (31) for selecting the at least one item of data is changed when the orientation of the portable device (10) is changed from the first orientation ($\alpha_0$) to the second orientation ($\alpha_1$), and the selection of the at least one item of data is controllable by movement of the slider element (31) at the same time as controlling the sensitivity of the slider element (31).

2. The method according to claim 1, wherein

     - the first orientation ($\alpha_0$) is comprised in a first orientation range around a horizontal orientation (H) of the portable device (10) with respect to a ground plane on which the user is located, and
     - the second orientation ($\alpha_1$) is an orientation of the portable device (10) which is not comprised in the first orientation range.

3. The method according to one of claims 1 to 2, wherein

    - the upper data level and lower data level ($R_{select}$, $L_{select}$) are located at respective opposite sides (RT, LT) of the slider bar (30), and
    - at least the upper data level ($R_{select}$) is changed when the portable device (10) is tilted in a direction towards the side (RT) of the upper data level ($R_{select}$), and/or
    - at least the lower data level ($L_{select}$) is changed when the portable device (10) is tilted in a direction towards the side (LT) of the lower data level ($L_{select}$).

4. The method according to one of claims 1 to 3, comprising changing the data range (R) when the orientation of the portable device (10) is changed by tilting the portable device in an inclination from the first orientation ($\alpha_0$) to the second orientation ($\alpha_1$).

5. The method according to one of claims 1 to 4, wherein

    - the slider bar (30) defines a first data range (R1) when the portable device (10) is held in the first orientation ($\alpha_0$), and the method comprises
    - changing the first data range (R1) to a second data range (R2) different from the first data range (R1) when the orientation of the portable device (10) is changed from the first orientation ($\alpha_0$) to the second orientation ($\alpha_1$), and
    - providing the slider element (31) for selecting at least one item of data from the first data range (R1) or second data range (R2) by manipulating the slider element (31) through touch by a user input member.

6. The method according to one of claims 1 to 5, wherein

    - the slider bar (30) defines a first data range (R1) when the portable device (10) is held in the first orientation ($\alpha_0$), and the method comprises
    - changing the first data range (R1) to a second data range (R2) when the orientation of the portable device (10) is changed from the first orientation ($\alpha_0$) to the second orientation ($\alpha_1$),
    - changing the first data range (R1) to a third data range when the orientation of the portable device (10) is changed from the first orientation ($\alpha_0$) to a third orientation which is in opposite direction to the second orientation ($\alpha_1$), and
    - providing the slider element (31) for selecting at least one item of data from the first data range (R1), second data range (R2) or third data range by manipulating the slider element (31) through touch by a user input member,
    - wherein the second data range (R2) and third data range are the same, or are different from each other.

7. The method according to one of claims 1 to 6, wherein

    - the slider bar (30) defines a first data range (R1) when the portable device (10) is held in the first orientation ($\alpha_0$), and the method comprises
    - changing the first data range (R1) to a second data range (R2) when the orientation of the portable device (10) is changed from the first orientation ($\alpha_0$) to the second orientation ($\alpha_1$),
    - changing the second data range (R2) to a third data range (R3) when the orientation of the portable device (10) is changed from the second orientation ($\alpha_1$) to a third orientation ($\alpha_2$) different from the first orientation ($\alpha_0$), and
    - providing the slider element (31) for selecting at least one item of data from the first data range (R1), second data range (R2) or third data range (R3) by manipulating the slider element (31) through touch by a user input member.

8. A computer program product comprising software code sections which are configured to perform a method according to one of claims 1 to 7.

9. A system for providing a slider bar control on a graphical user interface displayed on a portable device, the system (1) comprising

    - a processing device (11) which is configured to provide a slider bar (30) on the graphical user interface (20), wherein the slider bar (30) defines a data range (R) from which data can be selected by the user, and to provide a slider element (31) associated with the slider bar (30) for selecting at least one item of data from the data range (R) by manipulating the slider element (31) through touch by a user input member,
    - wherein the processing device (11) is operatively coupleable with an orientation sensor (13) associated with the portable device (10), and configured to change the data range (R) in response to an orientation change of the portable device (10) when an orientation ($\alpha$) of the portable device (10) sensed by the orientation sensor (13) is changed from a first orientation ($\alpha_0$) to a second orientation ($\alpha_1$),
    - wherein the data range (R) comprises an upper data level ($R_{select}$) and a lower data level ($L_{select}$) defining the data range (R) between them, wherein the processing device (11) is configured to change at least one of the upper data level and lower data level ($R_{select}$, $L_{select}$) when the orientation of the portable device is changed from the first orientation ($\alpha_0$) to the second orientation ($\alpha_1$), wherein an amount of change of the at least one of the upper data level and lower data level ($R_{select}$, $L_{select}$) is at least partially proportional to an amount of change in orientation ($\alpha$) from the first orientation ($\alpha_0$) to the second orientation ($\alpha_1$) sensed by the orientation sensor (13), and wherein a sensitivity (S) of the slider element (31) for selecting the at least one item of data is changed when the orientation of the portable device (10) is changed from the first orientation ($\alpha_0$) to the second orientation ($\alpha_1$) and the selection of the at least one item of data is controllable by movement of the slider element (31) at the same time as controlling the sensitivity of the slider element (31).

10. The system according to claim 9, wherein the processing device (11) is at least in part comprised in the portable device (10).

11. The system according to claim 9 or 10, wherein the portable device (10) is at least one of: a smartphone, a tablet computer, a portable computer, a wearable computer, a remote control, a media player, a media player control and e-book reader.

## Patentansprüche

1. Verfahren zum Bereitstellen einer Schiebereglersteuerung über einen Schieberegler, der auf einer grafischen Benutzeroberfläche eines tragbaren Geräts angezeigt wird, wobei das Verfahren folgende Schritte aufweist:

   - Bereitstellen eines Schiebereglers (30) auf der grafischen Benutzeroberfläche (20), wobei der Schieberegler (30) einen Datenbereich (R) definiert, aus dem Daten von dem Benutzer ausgewählt werden können,
   - Bereitstellen eines dem Schieberegler (30) zugeordneten Schieberelements (31) zum Auswählen mindestens eines Datenelements aus dem Datenbereich (R) durch Manipulieren des Schieberelements (31) durch Berührung mittels eines Benutzereingabeelements, und
   - Vergrößern des Datenbereichs (R) in Reaktion auf eine Orientierungsänderung des tragbaren Geräts (10), wenn die Orientierung des tragbaren Geräts (10) von einer ersten Orientierung ($\alpha_0$) in eine zweite Orientierung ($\alpha_1$) geändert wird,
   - wobei der Datenbereich (R) ein oberes Datenniveau ($R_{select}$) und ein unteres Datenniveau ($L_{select}$) aufweist, die den Datenbereich (R) zwischen sich definieren, wobei mindestens eines von dem oberen Datenniveau und dem unteren Datenniveau ($R_{select}$, $L_{select}$) geändert wird, wenn die Orientierung des tragbaren Geräts von der ersten Orientierung ($\alpha_0$) in die zweite Orientierung ($\alpha_1$) geändert wird, wobei ein Änderungsausmaß des mindestens einen von dem oberen Datenniveau und dem unteren Datenniveau ($R_{select}$, $L_{select}$) zumindest teilweise proportional zu einem Änderungsausmaß der Orientierung (a) von der ersten Orientierung ($\alpha_0$) in die zweite Orientierung ($\alpha_1$) ist,
   - wobei eine Empfindlichkeit (S) des Schieberelements (31) zum Auswählen des mindestens eines Datenelements geändert wird, wenn die Orientierung des tragbaren Geräts (10) von der ersten Orientierung ($\alpha_0$) in die zweite Orientierung ($\alpha_1$) geändert wird, und wobei das Auswählen des mindestens einen Datenelements durch Bewegung des Schieberelements (31) gleichzeitig mit der Steuerung der Empfindlichkeit des Schieberelements (31) steuerbar ist.

2. Verfahren nach Anspruch 1, wobei

   - die erste Orientierung ($\alpha_0$) in einem ersten Orientierungsbereich um eine horizontale Orientierung (H) des tragbaren Geräts (10) in Bezug auf eine Bodenebene liegt, auf der sich der Benutzer befindet, und
   - die zweite Orientierung ($\alpha_1$) eine Orientierung des tragbaren Geräts (10) ist, die nicht in dem ersten Orientierungsbereich enthalten ist.

3. Verfahren nach einem der Ansprüche 1 bis 2, wobei

   - das obere Datenniveau und das untere Datenniveau ($R_{select}$, $L_{select}$) sich auf jeweils gegenüberliegenden Seiten (RT, LT) des Schiebereglers (30) befinden, und
   - mindestens das obere Datenniveau ($R_{select}$) geändert wird, wenn das tragbare Gerät (10) in Richtung auf die Seite (RT) des oberen Datenniveaus ($R_{select}$) geneigt wird, und/oder
   - mindestens das untere Datenniveau ($L_{select}$) geändert wird, wenn das tragbare Gerät (10) in Richtung auf die Seite (LT) des unteren Datenniveaus ($L_{select}$) geneigt wird.

4. Verfahren nach einem der Ansprüche 1 bis 3, das das Ändern des Datenbereichs (R) beinhaltet, wenn die Orientierung des tragbaren Geräts (10) geändert wird, indem das tragbare Gerät in einer Neigungsbewegung von der ersten Orientierung ($\alpha_0$) in die zweite Orientierung ($\alpha_1$) geneigt wird.

**5.** Verfahren nach einem der Ansprüche 1 bis 4, wobei

- der Schieberegler (30) einen ersten Datenbereich (R1) definiert, wenn das tragbare Gerät (10) in der ersten Orientierung ($\alpha_0$) gehalten wird, und wobei das Verfahren beinhaltet:
- Ändern des ersten Datenbereichs (R1) in einen zweiten Datenbereich (R2), der sich von dem ersten Datenbereich (R1) unterscheidet, wenn die Orientierung des tragbaren Geräts (10) von der ersten Orientierung ($\alpha_0$) in die zweite Orientierung ($\alpha_1$) geändert wird, und
- Bereitstellen des Schieberelements (31) zum Auswählen mindestens eines Datenelements aus dem ersten Datenbereich (R1) oder dem zweiten Datenbereich (R2) durch Manipulieren des Schieberelements (31) durch Berührung mittels eines Benutzereingabeelements.

**6.** Verfahren nach einem der Ansprüche 1 bis 5, wobei

- der Schieberegler (30) einen ersten Datenbereich (R1) definiert, wenn das tragbare Gerät (10) in der ersten Orientierung ($\alpha0$) gehalten wird, und wobei das Verfahren beinhaltet:
- Ändern des ersten Datenbereichs (R1) in einen zweiten Datenbereich (R2), wenn die Orientierung des tragbaren Geräts (10) von der ersten Orientierung ($\alpha_0$) in die zweite Orientierung ($\alpha_1$) geändert wird,
- Ändern des ersten Datenbereichs (R1) in einen dritten Datenbereich, wenn die Orientierung des tragbaren Geräts (10) von der ersten Orientierung ($\alpha_0$) in eine dritte Orientierung geändert wird, die in entgegengesetzter Richtung zu der zweiten Orientierung ($\alpha_1$) vorliegt, und
- Bereitstellen des Schieberelements (31) zum Auswählen mindestens eines Datenelements aus dem ersten Datenbereich (R1), dem zweiten Datenbereich (R2) oder dem dritten Datenbereich durch Manipulieren des Schieberelements (31) durch Berührung mittels eines Benutzereingabeelements,
- wobei der zweite Datenbereich (R2) und der dritte Datenbereich gleich oder voneinander verschieden sind.

**7.** Verfahren nach einem der Ansprüche 1 bis 6, wobei

- der Schieberegler (30) einen ersten Datenbereich (R1) definiert, wenn das tragbare Gerät (10) in der ersten Orientierung ($\alpha_0$) gehalten wird, und wobei das Verfahren beinhaltet:
- Ändern des ersten Datenbereichs (R1) in einen zweiten Datenbereich (R2), wenn die Orientierung des tragbaren Geräts (10) von der ersten Orientierung ($\alpha_0$) in die zweite Orientierung ($\alpha_1$) geändert wird,
- Ändern des zweiten Datenbereichs (R2) in einen dritten Datenbereich (R3), wenn die Orientierung des tragbaren Geräts (10) von der zweiten Orientierung ($\alpha_1$) in eine dritte Orientierung ($\alpha_2$) geändert wird, die sich von der ersten Orientierung ($\alpha_0$) unterscheidet, und
- Bereitstellen des Schieberelements (31) zum Auswählen mindestens eines Datenelements aus dem ersten Datenbereich (R1), dem zweiten Datenbereich (R2) oder dem dritten Datenbereich (R3) durch Manipulieren des Schieberelements (31) durch Berührung mittels eines Benutzereingabeelements.

**8.** Computerprogrammprodukt mit Softwarecodeabschnitten, die zur Durchführung eines Verfahrens nach einem der Ansprüche 1 bis 11 konfiguriert sind.

**9.** System zum Bereitstellen einer Schiebereglersteuerung auf einer grafischen Benutzeroberfläche, die auf einem tragbaren Gerät angezeigt wird, wobei das System (1) aufweist:

- eine Verarbeitungseinrichtung (11), die dazu ausgebildet ist, einen Schieberegler (30) auf der grafischen Benutzeroberfläche (20) bereitzustellen, wobei der Schieberegler (30) einen Datenbereich (R) definiert, aus dem Daten von dem Benutzer ausgewählt werden können, sowie ein dem Schieberegler (30) zugeordnetes Schieberelement (31) bereitzustellen zum Auswählen mindestens eines Datenelements aus dem Datenbereich (R) durch Manipulieren des Schieberelements (31) durch Berührung mittels eines Benutzereingabeelements,
- wobei die Verarbeitungseinrichtung (11) mit einem dem tragbaren Gerät (10) zugeordneten Orientierungssensor (13) betriebsmäßig koppelbar ist und dazu ausgebildet ist, den Datenbereich (R) in Reaktion auf eine Orientierungsänderung des tragbaren Geräts (10) zu ändern, wenn eine von dem Orientierungssensor (13) erfasste Orientierung ($\alpha$) des tragbaren Geräts (10) von einer ersten Orientierung ($\alpha_0$) in eine zweite Orientierung ($\alpha_1$) geändert wird,
- wobei der Datenbereich (R) ein oberes Datenniveau ($R_{select}$) und ein unteres Datenniveau ($L_{select}$) aufweist, die den Datenbereich (R) zwischen sich definieren, wobei die Verarbeitungseinrichtung (11) dazu ausgebildet ist, mindestens eines von dem oberen Datenniveau und dem unteren Datenniveau ($R_{select}$, $L_{select}$) zu ändern, wenn die Orientierung des tragbaren Geräts von der ersten Orientierung ($\alpha_0$) in die zweite Orientierung ($\alpha_1$) geändert wird, wobei

ein Änderungsausmaß des mindestens einen von dem oberen Datenniveau und dem unteren Datenniveau ($R_{select}$, $L_{select}$) zumindest teilweise proportional zu einem von dem Orientierungssensor (13) erfassten Änderungsausmaß der Orientierung ($\alpha$) von der ersten Orientierung ($\alpha_0$) in die zweite Orientierung ($\alpha_1$) ist, und wobei eine Empfindlichkeit (S) des Schieberelements (31) zum Auswählen des mindestens eines Datenelements geändert wird, wenn die Orientierung des tragbaren Geräts (10) von der ersten Orientierung ($\alpha_0$) in die zweite Orientierung ($\alpha_1$) geändert wird, und wobei die Auswahl des mindestens einen Datenelements durch Bewegung des Schieberelements (31) gleichzeitig mit der Steuerung der Empfindlichkeit des Schieberelements (31) steuerbar ist.

10. System nach Anspruch 9,
wobei die Verarbeitungseinrichtung (11) zumindest teilweise in der tragbaren Vorrichtung (10) enthalten ist.

11. System nach Anspruch 9 oder 10,
wobei das tragbare Gerät (10) mindestens eines ist von: einem Smartphone, einem Tablet-Computer, einem tragbaren Computer, einem am Körper tragbaren Computer, einer Fernbedienung, einem Medien-Abspielgerät, einer Medien-Abspielgerätesteuerung und einem E-Book-Lesegerät.

**Revendications**

1. Procédé destiné à procurer une commande d'une barre de défilement par l'intermédiaire d'une barre de défilement qui vient s'afficher sur une interface utilisateur graphique d'un dispositif portable, comprenant les étapes dans lesquelles :

   - on procure une barre de défilement (30) sur l'interface utilisateur graphique (20) ; dans lequel la barre de défilement (30) définit une plage de données (R) à partir de laquelle des données peuvent être sélectionnées par l'utilisateur ;
   - on procure un élément de défilement (31) associé à la barre de défilement (30) pour la sélection d'au moins un élément de données à partir de la plage de données (R) via une manipulation de l'élément de défilement (31) par voie tactile par l'intermédiaire d'un membre d'entrée d'un utilisateur ; et
   - on augmente la plage de données (R) en réponse à un changement d'orientation du dispositif portable (10) lorsque l'orientation du dispositif portable (10) est soumise à une modification en passant d'une première orientation ($\alpha_0$) à une deuxième orientation ($\alpha_1$) ;

   - dans lequel la plage de données (R) comprend un niveau de données supérieur ($R_{select}$) et un niveau de données inférieur ($L_{select}$) définissant la plage de données (R) entre eux ; dans lequel au moins un niveau de données choisi parmi le niveau de données supérieur et le niveau de données inférieur ($R_{select}$, $L_{select}$) est soumis à une modification lorsque l'orientation du dispositif portable change pour passer de la première orientation ($\alpha_0$) à la deuxième orientation ($\alpha_1$) ; dans lequel une ampleur de changement dudit au moins un niveau de données choisi parmi le niveau de données supérieur et le niveau de données inférieur ($R_{select}$, $L_{select}$) est au moins en partie proportionnelle à une ampleur de changement de l'orientation ($\alpha$) lors du passage de la première orientation ($\alpha_0$) à la deuxième orientation ($\alpha_1$) ;
   - dans lequel une sensibilité (S) de l'élément de défilement (31) destiné à la sélection d'au moins un élément de données est soumise à un changement lorsque l'orientation du dispositif portable (10) change pour passer de la première orientation ($\alpha_0$) à la deuxième orientation ($\alpha_1$) ; et la sélection dudit au moins un élément de données peut être commandée par le mouvement de l'élément de défilement (31) en même temps que le réglage de la sensibilité de l'élément de défilement (31).

2. Procédé selon la revendication 1, dans lequel

   - la première orientation ($\alpha_0$) est comprise dans une première plage d'orientations autour d'une orientation horizontale (H) du dispositif portable (10) par rapport à un plan de sol sur lequel est situé l'utilisateur ; et
   - la deuxième orientation ($\alpha_1$) représente une orientation du dispositif portable (10) qui n'est pas comprise dans la première plage d'orientations.

3. Procédé selon l'une quelconque des revendications 1 à 2, dans lequel

   - le niveau de données supérieur et le niveau de données inférieur ($R_{select}$, $L_{select}$) sont situés sur des côtés opposés respectifs (RT, LT) de la barre de défilement (30) ; et
   - au moins le niveau de données supérieur ($R_{select}$) est soumis à une modification lorsqu'on fait basculer le dispositif portable (10) dans une direction qui s'étend vers le côté (RT) du niveau de données supérieur ($R_{select}$) ; et/ou
   - au moins le niveau de données inférieur ($L_{select}$) est soumis à une modification lorsqu'on fait basculer le dispositif portable (10) dans une direction qui s'étend vers le côté (LT) du niveau de données inférieur ($L_{select}$).

**4.** Procédé selon l'une quelconque des revendications 1 à 3, comprenant le fait de modifier la plage de données (R) lorsque l'orientation du dispositif portable (10) subit une modification en faisant basculer le dispositif portable dans une inclinaison allant de la première orientation ($\alpha_0$) à la deuxième orientation ($\alpha_1$).

**5.** Procédé selon l'une quelconque des revendications 1 à 4, dans lequel

- la barre de défilement (30) définit une première plage de données (R1) lorsque le dispositif portable (10) est tenu en main dans la première orientation ($\alpha_0$) ; et le procédé comprend le fait de :
- modifier la première plage de données (R1) pour passer à une deuxième plage de données (R2) différente de la première plage de données (R1) lorsque l'orientation du dispositif portable (10) subit une modification en passant de la première orientation ($\alpha_0$) à la deuxième orientation ($\alpha_1$) ; et
- procurer l'élément de défilement (31) pour la sélection d'au moins un élément de données à partir de la première plage de données (R1) ou de la deuxième plage de données (R2) en passant par une manipulation de l'élément de défilement (31) par voie tactile par l'intermédiaire d'un membre d'entrée d'un utilisateur.

**6.** Procédé selon l'une quelconque des revendications 1 à 5, dans lequel

- la barre de défilement (30) définit une première plage de données (R1) lorsque le dispositif portable (10) est tenu en main dans la première orientation ($\alpha_0$) ; et le procédé comprend le fait de :
- modifier la première plage de données (R1) pour passer à une deuxième plage de données (R2) lorsque l'orientation du dispositif portable (10) subit une modification en passant de la première orientation ($\alpha_0$) à la deuxième orientation ($\alpha_1$) ;
- modifier la première plage de données (R1) pour passer à une troisième plage de données lorsque l'orientation du dispositif portable (10) subit une modification en passant de la première orientation ($\alpha_0$) à une troisième orientation qui s'étend dans une direction opposée à celle de la deuxième orientation ($\alpha_1$) ; et
- procurer l'élément de défilement (31) pour la sélection d'au moins un élément de données à partir de la première plage de données (R1), de la deuxième plage de données (R2) ou de la troisième plage de données en passant par une manipulation de l'élément de défilement (31) par voie tactile par l'intermédiaire d'un membre d'entrée d'un utilisateur ;
- dans lequel la deuxième plage de données (R2) et la troisième plage de données sont identiques ou sont différentes l'une de l'autre.

**7.** Procédé selon l'une quelconque des revendications 1 à 6, dans lequel

- la barre de défilement (30) définit une première plage de données (R1) lorsque le dispositif portable (10) est tenu en main dans la première orientation ($\alpha_0$) ; et le procédé comprend le fait de :
- modifier la première plage de données (R1) pour passer à une deuxième plage de données (R2) lorsque l'orientation du dispositif portable (10) subit une modification en passant de la première orientation ($\alpha_0$) à la deuxième orientation (ai) ;
- modifier la deuxième plage de données (R2) pour passer à une troisième plage de données (R3) lorsque l'orientation du dispositif portable (10) subit une modification en passant de la deuxième orientation ($\alpha_1$) à une troisième orientation ($\alpha_2$) qui est différente de la première orientation ($\alpha_0$) ; et
- procurer l'élément de défilement (31) pour la sélection d'au moins un élément de données à partir de la première plage de données (R1), de la deuxième plage de données (R2) ou de la troisième plage de données (R3) en passant par une manipulation de l'élément de défilement (31) par voie tactile par l'intermédiaire d'un membre d'entrée d'un utilisateur.

**8.** Produit de programme informatique comprenant des sections de codes de logiciels qui sont configurées pour la mise en œuvre d'un procédé selon l'une quelconque des revendications 1 à 7.

**9.** Système destiné à procurer une commande d'une barre de défilement sur une interface utilisateur graphique affichée sur un dispositif portable, le système (1) comprenant :

- un dispositif de traitement (11) qui est configuré pour procurer une barre de défilement (30) sur l'interface utilisateur graphique (20) ; dans lequel la barre de défilement (30) définit une plage de données (R) partir de laquelle des données peuvent être sélectionnées par l'utilisateur, et pour procurer un élément de défilement (31) associé à la barre de défilement (30) pour la sélection d'au moins un élément de données à partir de la plage de données (R) via une manipulation de l'élément de défilement (31) par voie tactile par l'intermédiaire d'un membre d'entrée d'un utilisateur ;

- dans lequel le dispositif de traitement (11) peut être couplé de manière opérationnelle à un capteur d'orientation (13) associé au dispositif portable (10) et configuré pour modifier la plage de données (R) en réponse à un changement d'orientation du dispositif portable (10) lorsqu'une orientation ($\alpha$) du dispositif portable (10) détectée par le capteur d'orientation (13) est soumise à une modification en passant d'une première orientation ($\alpha_0$) à une deuxième orientation ($\alpha_1$) ;

- dans lequel la plage de données (R) comprend un niveau de données supérieur ($R_{select}$) et un niveau de données inférieur ($L_{select}$) définissant la plage de données (R) entre eux ; dans lequel le dispositif de traitement (11) est configuré pour modifier au moins un niveau choisi parmi le niveau de données supérieur et le niveau de données inférieur ($R_{select}$, $L_{select}$) lorsque l'orientation du dispositif portable change pour passer de la première orientation ($\alpha_0$) à la deuxième orientation ($\alpha_1$) ; dans lequel une ampleur de changement dudit au moins un niveau de données choisi parmi le niveau de données supérieur et le niveau de données inférieur ($R_{select}$, $L_{select}$) est au moins en partie proportionnelle à une ampleur du changement d'orientation ($\alpha$) lors du passage de la première orientation ($\alpha_0$) à la deuxième orientation ($\alpha_1$) détecté par le capteur d'orientation (13) ; et dans lequel une sensibilité (S) de l'élément de défilement (31) destiné à la sélection d'au moins un élément de données est soumise à un changement lorsque l'orientation du dispositif portable (10) change pour passer de la première orientation ($\alpha_0$) à la deuxième orientation ($\alpha_1$) ; et la sélection dudit au moins un élément de données peut être commandée par le mouvement de l'élément de défilement (31) en même temps que le réglage de la sensibilité de l'élément de défilement (31).

10. Système selon la revendication 9, dans lequel le dispositif de traitement (11) est compris au moins en partie dans le dispositif portable (10).

11. Système selon la revendication 9 ou 10, dans lequel le dispositif portable (10) représente au moins un dispositif choisi parmi : un téléphone intelligent, un ordinateur tablette, un ordinateur portable, un ordinateur portatif, une commande à distance, un lecteur multimédia, une commande de lecteur multimédia et un lecteur de livres électroniques.

EP 3 336 674 B1

Fig. 1

## Fig. 2

(A)

$\alpha_0 = 0$

$S(\alpha_0)$

(B)

$L_{select}(\alpha_1) < L_{select}(\alpha_0)$
$R_{select}(\alpha_0) < R_{select}(\alpha_1)$

$\alpha_1 \neq 0$

$S(\alpha_0) > S(\alpha_1)$

(C)

$L_{select}(\alpha_2) < L_{select}(\alpha_1) < L_{select}(\alpha_0)$
$R_{select}(\alpha_0) < R_{select}(\alpha_1) < R_{select}(\alpha_2)$

$\alpha_2 \neq 0$
$\alpha_2 > \alpha_1$

$S(\alpha_0) > S(\alpha_1) > S(\alpha_2)$

## Fig. 3

**(A)**

$$S = \left| \frac{120\ min - 0\ min}{100\ mm} \right| = 72\ \tfrac{sec}{mm}$$

**(B.1)**

$$S(0) = \left| \frac{65\ min - 55\ min}{100\ mm} \right| = 6\ \tfrac{sec}{mm}$$

$\alpha_0 = 0$

**(B.2)**

$$S(30°) = \left| \frac{75\ min - 45\ min}{100\ mm} \right| = 18\ \tfrac{sec}{mm}$$

$\alpha_1 = 30°$

**(B.3)**

$$S(70°) = \left| \frac{120\ min - 0\ min}{100\ mm} \right| = 72\ \tfrac{sec}{mm}$$

$\alpha_2 \geq 70°$

EP 3 336 674 B1

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2008085770 A
- US 6922816 B1
- US 9311965 B1
- EP 2378402 A1
- US 2012151401 A
- ES 2345757 A1